# EUROPÄISCHE PATENTANMELDUNG

(11) **EP 2 281 651 A2**
(43) Veröffentlichungstag der Anmeldung: **09.02.2011**
(21) Anmeldenummer: 10007607.4
(22) Anmeldetag: 22.07.2010
(51) Int. Cl.: B23D 47/00

(54) **Motorisch angetriebene Handkreissäge**

(30) Priorität: 08.08.2009 DE 102009036797
(71) Anmelder: Metabowerke GmbH, 72622 Nürtingen (DE)
(72) Erfinder: Nyber, Oliver, Dipl.-Ing., 72622 Nürtingen (DE)
(74) Vertreter: Raunecker, Klaus Peter

(57) **Zusammenfassung**

Motorisch angetriebene Handkreissäge (2), insbesondere Tauchkreissäge, mit einem einen Elektromotor mit einer Ankerwelle aufnehmenden Motorgehäuseteil (4) und einem eine Sägewelle und ein Kreissägeblatt aufnehmenden Getriebe-oder Sägegehäuseteil (10), die mittelbar oder unmittelbar gegeneinander montiert sind, wobei das Kreissägeblatt (16) gegen einen Spannflansch (14) bei der Sägewelle (12) drehfest montierbar ist; erfindungsgemäß wird vorgeschlagen, dass zwischen Motorgehäuseteil (4) und Getriebe- oder Sägegehäuseteil (10) und/oder zwischen Spannflansch (14) und einer Abstufung der Sägewelle (12) oder zwischen Spannflansch (14) und Kreissägeblatt (16) ein flächenhaft erstrecktes nachgiebig verformbares Dämpfungselement (42, 44) vorgesehen ist.

## Beschreibung

Die Erfindung betrifft eine motorisch angetriebene Handkreissäge, insbesondere Tauchkreissäge, mit einem einen Elektromotor mit einer Ankerwelle aufnehmenden Motorgehäuseteil und einem eine Sägewelle und ein Kreissägeblatt aufnehmenden Getriebe- oder Sägegehäuseteil, die mittelbar oder unmittelbar gegeneinander montiert sind, wobei das Kreissägeblatt gegen einen Spannflansch bei der Sägewelle drehfest montierbar ist.

Bei Handkreissägen und insbesondere bei Tauchkreissägen, bei denen Motor- und Sägegehäuseteil um eine parallel zur Sägewelle verlaufende Achse gegenüber einer auf der zu bearbeitenden Fläche aufliegenden Basis verschwenkbar sind, stellt sich aufgrund des großen Trägheitsmoments und des notwendigerweise vorzusehenden Spiels bei den Getriebekomponenten stets die Aufgabe, die Laufruhe zu beherrschen und hohe Standzeiten zu erreichen. Man versuchte bislang, dies durch hochgenaue Fertigung der Gehäuseteile und der in den Gehäuseteilen vorgesehenen Lagerkomponenten und Getriebekomponenten zu verbessern.

Der vorliegenden Erfindung liegt die Aufgabe zugrunde, eine motorisch angetriebene Handkreissäge bereitzustellen, die auf wirtschaftliche Weise herstellbar ist und sich dennoch durch Laufruhe und eine hohe Standzeit auszeichnet.

Diese Aufgabe wird bei einer Handkreissäge der genannten Art erfindungsgemäß dadurch gelöst, dass zwischen Motorgehäuseteil und Getriebe- oder Sägegehäuseteil und/oder zwischen Spannflansch und einer Abstufung der Sägewelle oder zwischen Spannflansch und Kreissägeblatt ein flächenhaft erstrecktes nachgiebig verformbares Dämpfungselement vorgesehen ist.

Es wurde überraschenderweise festgestellt, dass sich bei einer Handkreissäge der genannten Art eine höhere Laufruhe erreichen lässt, wenn man von dem seither praktizierten Prinzip der harten Verbindung der Gehäuseteile gegeneinander und/oder des Sägeblatts gegen die Sägewelle Abstand nimmt und stattdessen ein nachgiebig verformbares Dämpfungselement zwischenordnet. Es wurde mit der vorliegenden Erfindung nämlich festgestellt, dass das mit hohen Drehzahlen angetriebene Kreissägeblatt eine hohe Resonanzkapazität für die Einleitung von akustisch und taktil wahrnehmbaren Schwingungen auf die Gehäuseteile darstellt und auch die Aufnahme und Aussendung von im Getriebebereich entstehenden Schwingungen begünstigt. Durch die erfindungsgemäße Zwischenordnung des Dämpfungselements zwischen den genannten Komponenten und vorzugsweise sowohl zwischen Motorgehäuseteil und Getriebe- oder Sägegehäuseteil und zwischen Spannflansch und einer Abstufung der Sägewelle oder zwischen Spannflansch und Sägeblatt lässt sich eine Entkopplung der Resonanzkapazität aufweisenden Gehäuseteile voneinander bzw. der Gehäuseteile von dem Sägeblatt erreichen. Hiermit kann auf wirtschaftliche Weise eine hohe Laufruhe bei der Handkreissäge realisiert werden, wobei gleichzeitig ein erwünschtes Spiel im Bereich der Getriebekomponenten beibehalten werden kann. Es hat sich gezeigt, dass die erhebliche Geräuschentwicklung beim Anfahren der Handkreissäge im noch unbelasteten Zustand (Leerlauf) infolge des trägheitsbedingten Überholeffekts der das Sägeblatt aufweisenden Abtriebskomponenten deutlich reduziert werden kann, und zwar ohne dass ein erhöhter Aufwand im Bereich der Genauigkeit der Ausbildung, der Anordnung und des Zusammenwirkens der Getriebekomponenten betrieben werden müsste.

Typischerweise umfassen diese Getriebekomponenten ein auf der Ankerwelle vorgesehenes Antriebsritzel, welches sich aus dem Motorgehäuseteil herauserstreckt und in den Getriebe- oder Sägegehäuseteil hineinerstreckt und dort mit der Sägewelle, typischerweise über eine Stirnverzahnung im Bereich der Sägewelle, in Antriebsverbindung steht. Hierfür sind Lagerkomponenten, typischerweise Wälzlager, für die Sägewelle und vorzugsweise auch für die Ankerwelle in dem Getriebe- oder Sägegehäuseteil in entsprechend geformten Lageraufnahmebereichen vorgesehen.

Es hat sich herausgestellt, dass bei Anordnung des Dämpfungselements zwischen dem Motorgehäuseteil und dem Getriebe- oder Sägegehäuseteil eine Entkopplung der beiden Gehäuseteile voneinander erreichbar ist, die wesentlich zur Erhöhung der Laufruhe beiträgt, was nicht ohne weiteres zu erwarten war.

Nach einer ersten Ausführungsform der Erfindung kann das flächenhafte nachgiebig verformbare Dämpfungselement auf Korkbasis, Zellulosebasis, aus Filz oder Leder, oder auf Kunststoffbasis, Gummibasis oder Elastomerbasis hergestellt sein. Es ist erfindungsgemäß so ausgebildet, dass es nachgiebig verformbar ist und zumindest im noch nicht verbauten Zustand vorzugsweise gewisse elastische Eigenschaften, also ein gewisses Rückstellvermögen aufweist. Auch wenn ein solches Dämpfungselement im verbauten Zustand derart komprimiert wird, dass beim anschließenden Lösen das Rückstellvermögen des komprimierten und verpressten Materials nur noch in geringem Maße feststellbar ist, so zeigt es sich doch, dass das Dämpfungselement zwischen den genannten Komponenten eine hohe Wirksamkeit aufweist.

In bevorzugter Weise ist das Dämpfungselement auf Kunststoffbasis, Elastomerbasis oder Gummibasis hergestellt. Es umfasst dabei in besonders bevorzugter Weise ein geschäumtes Elastomer oder geschäumten Gummi. Als besonders vorteilhafte Materialien haben sich Kunstschaumstoff, Polyurethanschaum, Zellkautschuk, Moosgummi oder Silikonschaum erwiesen.

Das Dämpfungselement kann dabei in vorteilhafter Weise eine EPDM-Basis (Ethylen Propylen Dien-Polymerisat) oder SBR-Basis (Styrol-Butadien-Polymerisat) oder NBR-Basis (Acrylnitril-Butadien-Polymerisat) umfassen.

Es erweist sich als vorteilhaft, wenn das Dämpfungselement einen Druckverformungsrest zwischen 0 - 40 %, insbesondere zwischen 0 - 30%, insbesondere zwischen 0 - 20%, insbesondere zwischen 0 - 10% aufweist. Der Druckverformungsrest bezeichnet die bleibende Verformung nach einer gleichmäßigen Belastung; sie wird nach DIN 53 517 oder DIN ISO 815 oder ASTM D 395 bestimmt.

Wie bereits erwähnt, ist das Dämpfungselement flächenhaft ausgebildet. Es umfasst in vorteilhafter Weise eine Dicke von 1,0 bis 5 mm, insbesondere von 1,5 bis 4 mm und weiter insbesondere von 1,5 bis 3 mm.

Das Dämpfungselement ist vorzugsweise als Formteil, insbesondere als Stanzteil oder Schnittteil, aus einem flächenhaften als Flachmaterial vorliegenden Werkstoff hergestellt.

Das Dämpfungselement ist vorteilhafterweise ringförmig geschlossen ausgebildet und kann dabei die grundsätzliche Form eines in Umfangsrichtung geschlossenen Flachdichtungselements aufweisen.

Die Erfindung erweist sich als besonders vorteilhaft bei Handkreissägen, bei denen der Motorgehäuseteil aus Kunststoff ausgebildet ist und der Getriebe- oder Sägegehäuseteil aus Metall, insbesondere aus Leichtmetall, wie Aluminium, Magnesium, und insbesondere als metallisches Druckgussteil ausgebildet ist.

Weiter kann es sich als vorteilhaft erweisen, wenn eine Öffnung des Motorgehäuseteils auf seiner dem Getriebe- oder Sägegehäuseteil zugewandten Seite von einem Deckelteil mit einer Öffnung für den Durchgriff der Ankerwelle überfangen ist, und der Getriebe- oder Sägegehäuseteil unter Zwischenordnung des Dämpfungselements gegen den Deckelteil anliegt. Bei dem genannten Deckelteil handelt es sich vorteilhafterweise um eine sogenannte Luftleitscheibe, welche einen Kühlluftstrom und Saugluftstrom zur Abführung von Sägespänen strömungstechnisch führt.

Weiter erweist es sich als vorteilhaft, wenn die Handkreissäge eine schwenkbare Schutzhaube aufweist, welche das Kreissägeblatt umfängt und bei der Ausführung eines Sägeschnitts das Kreissägeblatt entgegen einer Federvorspannung selbsttätig freigibt oder manuell in eine Freigabestellung schwenkbar ist. Wenn die schwenkbare Schutzhaube manuell in eine Freigabestellung schwenkbar und dort vorzugsweise arretierbar ist, so erweist sich dies für die Ausbildung von Tauchschnitten als vorteilhaft.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der erfindungsgemäßen Handkreissäge. In der Zeichnung zeigt:
- Figur 1: eine perspektivische Ansicht einer bevorzugten Ausführungsform der erfindungsgemäßen Handkreissäge;
- Figur 2: eine explosionsartige Darstellung eines Motorgehäuseteils mit Deckelteil, einer Schale eines Getriebe- oder Sägegehäuseteils und einer Sägewelle mit Spannflansch und
- Figur 3: eine perspektivische Ansicht der Teile nach Figur 2 von der anderen Seite gesehen.

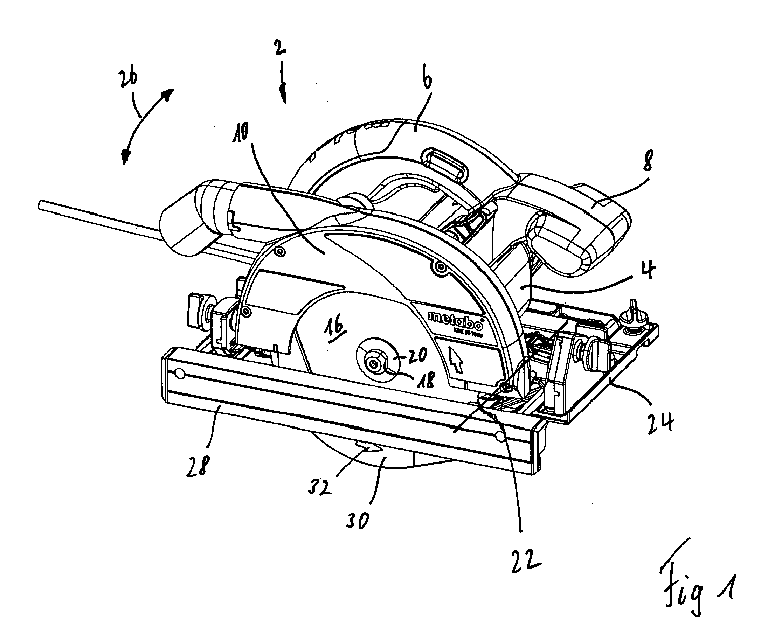

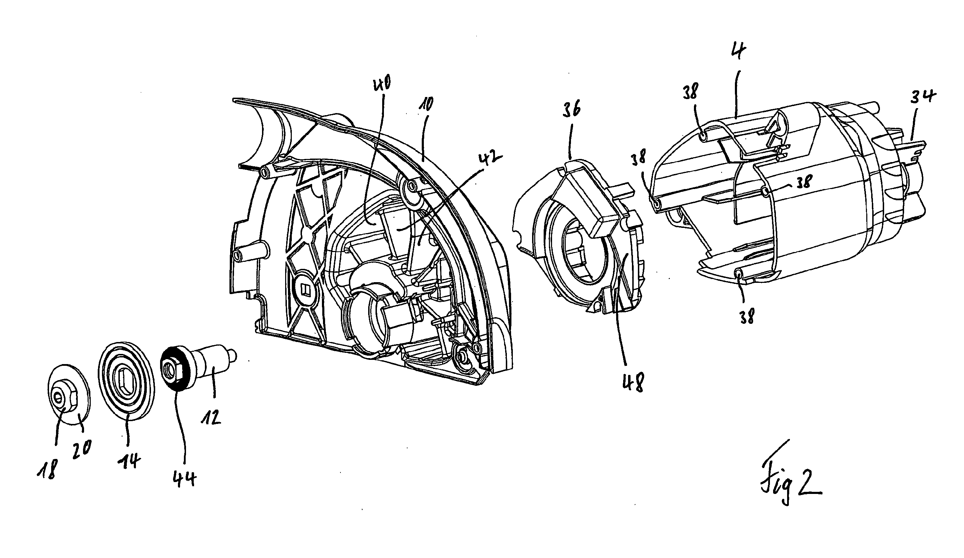

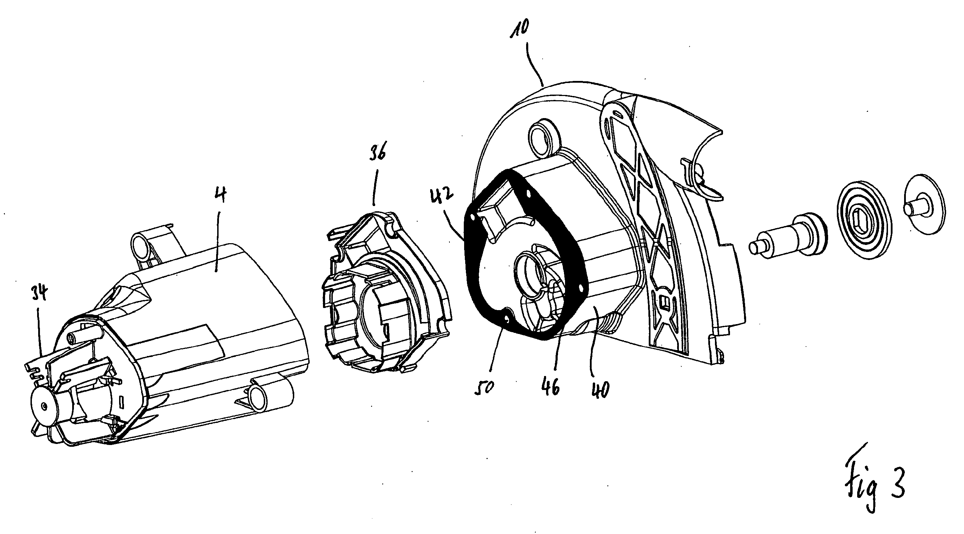

Figur 1 zeigt eine insgesamt mit dem Bezugszeichen 2 bezeichnete elektromotorisch angetriebene Handkreissäge, die als Tauchkreissäge ausgebildet ist. Sie umfasst einen Motorgehäuseteil 4, welcher den Elektromotor aufweist und an dem weitere Komponenten wie Bügelhandgriff 6 und Knaufgriff 8 befestigt sind. Weiter umfasst die Handkreissäge 2 einen Getriebe- oder Sägegehäuseteil 10, von dem in den Figuren 2 und 3 eine dem Motorgehäuseteil 4 zugewandte Halbschale dargestellt ist.

Der Getriebe- oder Sägegehäuseteil lagert eine Sägewelle 12, auf der drehfest ein Spannflansch 14 (Figur 2) sitzt, gegen den ein Kreissägeblatt 16 mittels einer Schraube 18 mit angeformtem Klemmflansch 20 drehfest montierbar ist. Das Getriebe- oder Sägegehäuseteil 10 ist auf noch näher zu beschreibende Weise gegen das Motorgehäuseteil 4 befestigt, und die so gebildete Einheit ist bezüglich einer parallel zur Sägewelle 12 verlaufenden Drehachse 22 gegenüber einem Basisteil 24 der Handkreissäge 2 zur Ausführung von Tauchschnitten verschwenkbar, in Richtung des Doppelpfeils 26. Des Weiteren ist in Figur 1 ein Seitenanschlagmittel 28 dargestellt. Eine das Kreissägeblatt 16 umfangende und freigebende Schutzhaube ist mit Bezugszeichen 30 bezeichnet. Die Schutzhaube 30 ist in Schließrichtung (Pfeil 32) vorgespannt und lässt sich entgegen der Schließrichtung bei der Ausführung eines Sägeschnitts selbsttätig in eine das Sägeblatt zunehmend freigebende Stellung verschwenken.

In den Figuren 2 und 3 sind einzelne für die Beschreibung der hier in Rede stehenden Erfindung relevante Komponenten der Handkreissäge dargestellt. Der Motorgehäuseteil 4 ist topfförmig ausgebildet und trägt auf seiner vom Getriebe-oder Sägegehäuseteil 10 abgewandten Seite ein Lüfterrad 34. Er ist auf seiner dem Getriebe- oder Sägegehäuseteil 10 zugewandten Seite von einem Deckelteil 36 verschließbar, welches eine Luftleitscheibe bildet. Das Deckelteil 36 ist im Bereich von Gewindeöffnungen 38 in dem topfförmig ausgebildeten Teil beispielhaft ausgespart. Beide Teile sind vorzugsweise aus spritzbarem Kunststoff hergestellt. Wie besonders gut aus Figur 3 zu ersehen ist, umfasst die dargestellte Halbschale des Getriebe- oder Sägegehäuseteils 10 auf ihrer dem Motorgehäuseteil 4 und dessen Deckelteil 36 zugewandten Seite einen sich block- oder kastenartig erhebenden Bereich 40, in dem die antriebsmäßige Kopplung der in den Figuren nicht dargestellten Ankerwelle mit der Sägewelle 12 untergebracht ist. Man erkennt aus Figur 2 eine verripte Struktur 42, welche die Stabilität des Getriebe- oder Sägegehäuseteils, insbesondere in Bereichen, in denen nicht dargestellte Lagerelemente angeordnet sind, unterstützen, insbesondere auch im Hinblick auf deren Maßhaltigkeit und Verwindungssteifigkeit im Betrieb.

Erfindungsgemäß ist zwischen Getriebe- oder Sägegehäuseteil 10 ein erstes Dämpfungselement 42 (Figur 3) und zwischen Sägewelle 12 und Spannflansch 14 für das Kreissägeblatt 16 ein zweites Dämpfungselement 44 vorgesehen. Beide Dämpfungselemente 42, 44 sind aus einem nachgiebig verformbaren Material der eingangs beschriebenen Art hergestellt. Dabei mutet das erste Dämpfungselement 42 wie eine ringförmige geschlossene Flachdichtung an. Das zweite Dämpfungselement 44 ist kreisscheibenförmig ausgebildet. Es wäre auch denkbar, dass es etwa die Fläche des Spannflanschs 14 aufweist und zwischen Kreissägeblatt 16 und Spannflansch 14 angeordnet ist.

Das erste Dämpfungselement 42 ist zwischen einer dem Motorgehäuseteil 4 zugewandten Stirnseite 46 des blockartigen Gehäusebereichs 40 des Getriebe- oder Sägegehäuseteils 10 und einer ihm zugewandten Stirnseite 48 des Deckelteils 36 angeordnet. Zur Verbindung der Komponenten werden nicht dargestellte Schrauben verwendet, die ausgehend von einer Innenseite des blockartigen Bereichs 40 durch Öffnungen 50 in dem ersten Dämpfungselement 42 hindurchgeführt und in die erwähnten Gewindeöffnungen 38 bei dem Motorgehäuseteil 4 eingeschraubt werden. Beim Festziehen dieser Schrauben wird eine vorzugsweise gleichmäßige Druckkraft auf das erste Dämpfungselement 42 ausgeübt, und es wird dabei im Bereich der gegeneinander anliegenden Stirnseiten 46 und 48 komprimiert. Dennoch kann es seine dämpfende Wirkung entfalten. Gleiches gilt für das zweite Dämpfungselement 44 bei der Sägewelle 12. Es hat sich in überraschender Weise gezeigt, dass durch die Dämpfungselemente 42, 44 nicht nur eine erhöhte Laufruhe erreicht werden kann, sondern dass sich diese auch in vorteilhafter Weise durch eine Verlängerung der Standzeit der Handkreissäge auswirken.

## Patentansprüche

1. Motorisch angetriebene Handkreissäge (2), insbesondere Tauchkreissäge, mit einem einen Elektromotor mit einer Ankerwelle aufnehmenden Motorgehäuseteil (4) und einem eine Sägewelle und ein Kreissägeblatt aufnehmenden Getriebe- oder Sägegehäuseteil (10), die mittelbar oder unmittelbar gegeneinander montiert sind, wobei das Kreissägeblatt (16) gegen einen Spannflansch (14) bei der Sägewelle (12) drehfest montierbar ist, **dadurch gekennzeichnet, dass** zwischen Motorgehäuseteil (4) und Getriebe- oder Sägegehäuseteil (10) und/oder zwischen Spannflansch (14) und einer Abstufung der Sägewelle (12) oder zwischen Spannflansch (14) und Kreissägeblatt (16) ein flächenhaft erstrecktes nachgiebig verformbares Dämpfungselement (42, 44) vorgesehen ist.

2. Handkreissäge nach Anspruch 1, **dadurch gekennzeichnet, dass** das Dämpfungselement (42, 44) auf Korkbasis, Zellulosebasis, aus Filz oder Leder, oder auf Kunststoffbasis, Gummibasis oder Elastomerbasis hergestellt ist.

3. Handkreissäge nach Anspruch 2, **dadurch gekennzeichnet, dass** das Dämpfungselement (42, 44) auf Kunststoffbasis, Elastomerbasis oder Gummibasis hergestellt ist.

4. Handkreissäge nach Anspruch 3, **dadurch gekennzeichnet, dass** das Dämpfungselement (42, 44) ein geschäumtes Elastomer oder geschäumten Gummi umfasst.

5. Handkreissäge nach Anspruch 4, **dadurch gekennzeichnet, dass** das Dämpfungselement (42, 44) Kunstschaumstoff, Polyurethanschaum, Zellkautschuk, Moosgummi oder Silikonschaum umfasst.

6. Handkreissäge nach Anspruch 5, **dadurch gekennzeichnet, dass** das Dämpfungselement (42, 44) eine EPDM-Basis (Ethylen Propylen Dien-Polymerisat) oder SBR-Basis (Styrol-Butadien-Polymerisat) oder NBR-Basis (Acrylnitril-Butadien-Polymerisat) umfasst.

7. Handkreissäge nach einem oder mehreren der vorstehenden Ansprüche, **dadurch gekennzeichnet, dass** das Dämpfungselement (42, 44) einen Druckverformungsrest zwischen 0 - 40 %, insbesondere zwischen 0 - 30%, insbesondere zwischen 0 - 20%, insbesondere zwischen 0 - 10% aufweist.

8. Handkreissäge nach einem oder mehreren der vorstehenden Ansprüche, **dadurch gekennzeichnet, dass** das Dämpfungselement (42, 44) ein 1,0 - 5 mm, insbesondere 1,5 - 4 mm, insbesondere 1,5 - 3 mm dickes Formteil umfasst.

9. Handkreissäge nach einem oder mehreren der vorstehenden Ansprüche, **dadurch gekennzeichnet, dass** das Dämpfungselement (42, 44) als Formteil, insbesondere Stanzteil oder Schnittteil, aus einem flächenhaften Werkstoff hergestellt ist.

10. Handkreissäge nach einem oder mehreren der vorstehenden Ansprüche, **dadurch gekennzeichnet, dass** das Dämpfungselement (42, 44) ringförmig geschlossen ausgebildet ist.

11. Handkreissäge nach einem oder mehreren der vorstehenden Ansprüche, **dadurch gekennzeichnet, dass** der Motorgehäuseteil (4) aus Kunststoff ausgebildet ist.

12. Handkreissäge nach einem oder mehreren der vorstehenden Ansprüche, **dadurch gekennzeichnet, dass** der Getriebe- oder Sägegehäuseteil (10) aus Metall, insbesondere Leichtmetall, wie Aluminium, Magnesium, und insbesondere als metallisches Druckgussteil ausgebildet ist.

13. Handkreissäge nach einem oder mehreren der vorstehenden Ansprüche, **dadurch gekennzeichnet, dass** eine Öffnung des Motorgehäuseteils (4) auf seiner dem Getriebe- oder Sägegehäuseteil (10) zugewandten Seite von einem Deckelteil (36) mit einer Öffnung für den Durchgriff der Ankerwelle überfangen ist, und der Getriebe- oder Sägegehäuseteil (10) unter Zwischenordnung des Dämpfungselements (42) gegen den Deckelteil (36) anliegt.

14. Handkreissäge nach einem oder mehreren der vorstehenden Ansprüche, **gekennzeichnet durch** eine schwenkbare Schutzhaube (30), welche das Kreissägeblatt (16) umfängt und entgegen einer Federvorspannung bei der Ausführung eines Sägeschnitts selbsttätig freigibt oder manuell in eine Freigabestellung schwenkbar ist.
